# EUROPÄISCHE PATENTSCHRIFT

(11) **EP 2 945 486 B1**
(45) Veröffentlichungstag und Bekanntmachung des Hinweises auf die Patenterteilung: **30.11.2016**
(21) Anmeldenummer: 14700721.5
(22) Anmeldetag: 17.01.2014
(51) Int. Cl.: A21B 1/46, A21B 5/02, A21B 3/16

(54) **BACKVORRICHTUNG**
BAKING APPARATUS
DISPOSITIF DE CUISSON

(30) Priorität: 18.01.2013 AT 372013
(43) Veröffentlichungstag der Anmeldung: 25.11.2015
(73) Patentinhaber: Haas Food Equipment GmbH, 1210 Wien (AT)
(72) Erfinder: ADAM, Reinhart, 1030 Wien (AT); HAAS, Johannes, A-1040 Wien (AT); HAAS, Josef, A-2100 Leobendorf (AT); JIRASCHEK, Stefan, A-2202 Königsbrunn (AT)
(74) Vertreter: Patentanwälte Puchberger, Berger und Partner
(86) Internationale Anmeldenummer: PCT/EP2014/050884
(87) Internationale Veröffentlichungsnummer: WO 2014/111511

(56) Entgegenhaltungen:
- WO-A1-2012/152675
- BE-A- 518 675
- DE-A1- 3 840 500
- GB-A- 2 135 178
- US-A- 2 640 444
- US-A- 5 787 800

## Beschreibung

Die Erfindung betrifft eine Backvorrichtung zur Herstellung von Backprodukten, insbesondere von gefüllten Backprodukten. Es ist bekannt, zur Herstellung gefüllter Backprodukte obere und untere Backformhälften vorzusehen, in die ein fließfähiger cremiger Backteig eingebracht wird. Auf den eingebrachten Backteig der unteren Backformhälfte wird die Füllmasse aufgetragen und dann die obere Backformhälfte mit eingefülltem Backteig auf die untere Backformhälfte aufgesetzt oder aufgeklappt und dann im Backofen gebacken.

Die bisher bekannt gewordenen Industrieöfen für die Herstellung derartiger gefüllter Backprodukte sind für eine intermittierende Verfahrensweise ausgelegt, wobei in dafür vorgesehenen Stationen schrittweise der Befüllvorgang, der Klappvorgang, das Backen und dann die Entnahme des fertigen Backproduktes durchgeführt wird. Bei dieser intermittierenden Verfahrensweise ist die Kapazität solcher Anlagen beschränkt, wodurch sich die Kosten für die Produkte erheblich erhöhen.

Die WO 2012/152675 A1 beschreibt eine Vorrichtung zum Herstellen von gebackenen Produkten, wobei zumindest eine Backplatte vorgesehen ist, deren Backfläche auf Backtemperatur heizbar ist, wobei die Backplatte eine Sensoreinrichtung zur Erfassung der Temperatur der Backplatte und/ oder des beim Backprozess auf die Backfläche der Backplatte einwirkenden Druckes aufweist.

Die US 2 640 444 A beschreibt eine automatische Backvorrichtung zum Herstellen von gebackenen Produkten, die in speziellen Backformen gebacken werden. Die Backvorrichtung umfasst ein System für ein schnelles Entnehmen und Austauschen von den Backformen ohne Unterbrechungen des Herstellungsvorgangs.

Es ist Aufgabe der vorliegenden Erfindung, eine industrielle Backvorrichtung vorzusehen, die für einen hohen Ausstoß von Backprodukten konzipiert ist und die nicht intermittierend sondern kontinuierlich betrieben werden kann. Dabei sollen Möglichkeiten vorgesehen sein, beschädigte oder verschmutzte Backformen während des laufenden Betriebes gegen reparierte, gereinigte oder neue Backformen auszutauschen, ohne den Herstellungsvorgang unterbrechen zu müssen.

Die Merkmale der Erfindung sind unter anderem den Patentansprüchen und der nachfolgenden Beschreibung zu entnehmen.

Gegebenenfalls betrifft die Erfindung eine Backvorrichtung zur Herstellung gefüllter Backprodukte, wobei die Backvorrichtung auf- und zuklappbare Backzangen aufweist, die auf einem in Längsrichtung des Backofens umlaufenden Endlosförderer von einer Beschickungsvorrichtung durch den Backraum des Backofens und zu einer Produktabnahmevorrichtung bewegbar sind, wobei die Backzangen eine untere Backform und eine obere Backform aufweisen, die jeweils um eine Backzangenachse zwischen einer um 180° offenen Offenstellung und einer geschlossenen Schließstellung bewegbar und in geschlossener Stellung arretierbar sind und die sich dadurch auszeichent, dass die Beschickungsvorrichtung zumindest eine Teigbeschickungsvorrichtung zum Beschicken der unteren und oberen Backformen in aufgeklappter Stellung und zumindest eine Füllmassebeschickungsvorrichtung zum Auftragen der Füllmasse auf die mit Teig beschickte Lage der unteren und/oder oberen Backform aufweist.

Gegebenenfalls ist vorgesehen, dass die Backzangenachsen quer zur Förderrichtung des Endlosförderers, bevorzugt in einem Winkel von 90°, dazu angeordnet sind. Gegebenenfalls ist vorgesehen, dass die Backzangen auf den Kettengliedern des Endlosförderers befestigt oder befestigbar sind. Gegebenenfalls ist vorgesehen, dass zum Auf- und Zuklappen der Backzangen für jede Backzange eine Klappvorrichtung vorgesehen ist, wobei die Klappvorrichtungen entsprechend der jeweiligen Stellung entlang des Endlosförderers gesteuert werden, sodass die Backzangen in Geschlossenstellung oder Offenstellung bewegt werden. Gegebenenfalls ist vorgesehen, dass die Backzangen in geschlossener Stellung durch eine Arretiervorrichtung geschlossen und mit dem Endlosförderer fest verbunden werden.

Gegebenenfalls ist vorgesehen, dass die Arretiervorrichtungen und deren Bewegungen von einer Steuerschiene gesteuert sind. Gegebenenfalls ist vorgesehen, dass die Backzangen über lösbare mechanische Verbindungen mit dem Endlosförderer verbunden sind und dass die Backvorrichtung an zumindest einer Stelle des Endlosförderers eine Backzangenentnahmestation aufweist, an der Backzangen zu einer nachfolgenden Revision wie z.B. Reinigung entnommen und wieder aufgesetzt werden können. Gegebenenfalls ist vorgesehen, dass der Endlosförderer kontinuierlich bewegt ist und gegebenenfalls die Abnahme und das Wiederzustellen der Backzangen am kontinuierlich bewegten Band erfolgt. Gegebenenfalls ist vorgesehen, dass die Klappvorrichtungen zum Öffnen und Schließen der Backzangen vor der Produktentnahmestation und vor dem Eintritt in den Backraum angeordnet sind.

Gegebenenfalls ist vorgesehen, dass nach dem Beschicken der unteren Backform mit Teig eine Vorbackvorrichtung vorgesehen ist, um den Teig vorzubacken.

Bevorzugt betrifft die Erfindung eine Backvorrichtung zur Herstellung von Backprodukten, insbesondere zur Herstellung gefüllter Backprodukte, wobei die Backvorrichtung auf- und zuklappbare Backzangen aufweist, die auf einem in Längsrichtung des Backofens umlaufenden und kontinuierlich bewegten Endlosförderer von einer Beschickungsvorrichtung durch den Backraum des Backofens und zu einer Produktabnahmevorrichtung bewegbar sind,
wobei die Backzangen eine untere Backform und eine obere Backform aufweisen, die jeweils um eine Backzangenachse zwischen einer Offenstellung und einer geschlossenen Schließstellung bewegbar sind, die sich dadurch auszeichnet, dass die Backzangen über lösbare mechanische Verbindungen mit dem Endlosförderer verbunden sind, dass die Backvorrichtung an zumindest einer Stelle des Endlosförderers eine Backzangenentnahmestation aufweist, an der Backzangen entnommen und wieder aufgesetzt werden können und dass die Abnahme und das Wiederzustellen der Backzangen am kontinuierlich bewegten Band erfolgt.

Gegebenenfalls ist vorgesehen, dass die lösbare mechanische Verbindung durch eine Arretiervorrichtung gebildet ist und dass die Arretiervorrichtungen und deren Bewegungen von einer Steuerschiene gesteuert sind.Gegebenenfalls ist vorgesehen, dass die Backzangen durch die Arretiervorrichtungen schließbar oder geschlossen sind und dass die Backzangen durch die Arretiervorrichtungen mit dem Endlosförderer fest verbindbar oder verbunden sind. Gegebenenfalls ist vorgesehen, dass Arretierhebel vorgesehen sind, die durch die Steuerschiene gesteuert sind und dass die Arretierhebel an den der Steuerschiene zugewandten Enden jeweils ein Steuerrad aufweisen.

Gegebenenfalls ist vorgesehen, dass die Backzangen auf Kettengliedern des Endlosförderers befestigt oder befestigbar sind. Gegebenenfalls ist vorgesehen, dass die Backzangen auf den beidseitigen Kettengliedern des Endlosförderers sitzen und auf diesem in geschlossener Stellung durch Arretierhebel festgehalten sind.

Gegebenenfalls ist vorgesehen, dass die Freigabe der Backzange durch das Öffnen des Arretierhebels erfolgt. Gegebenenfalls ist vorgesehen, dass die Backzange Haltestifte umfasst und dass der Arretierhebel die Backzange gegebenenfalls mit seiner Arretiergabel über die Haltestifte fest geschlossen und auch fest mit dem Kettenglied des Endlosförderers verbunden hält. Gegebenenfalls ist vorgesehen, dass am backraumseitigen hinteren Ende bei der Umlenkrolle die eine Backzangenabnahmevorrichtung und eine Backzangenzustellvorrichtung enthaltende

Backzangenentnahmestation vorgesehen sind. Gegebenenfalls ist vorgesehen, dass die Backzangenabnahmevorrichtung einen Greifbalken umfasst, auf dem verfahrbare und absenk- bzw. anhebbare Greiffinger vorgesehen sind, sodass eine Backzange vom Endlosband abgehoben und aus dem Backraum herausbefördert werden kann sowie zur nachfolgenden Bearbeitung einer Transportvorrichtung übergeben werden kann.

Gegebenenfalls ist vorgesehen, dass auf dem Greiferbalken verfahrbare und absenk- bzw. anhebbare Greiffinger vorgesehen sind, die abgesenkt werden können um in die auszutauschende Backzange einzugreifen und um die Backzange vom Endlosband abzuheben, aus dem Backraum herauszubefördern und zur nachfolgenden Bearbeitung einer Transportvorrichtung zu übergeben. Gegebenenfalls ist vorgesehen, dass die Backzangenzustellvorrichtung einen Zustellförderer umfasst, über den eine neue Backzange bevorzugt an den unteren Abschnitt des Endlosförderers herangefahren wird. Gegebenenfalls ist vorgesehen, dass die zugeführten neuen Backzangen vor der Übergabe vorgeheizt werden oder sind, sodass eine Konstanz der Backtemperatur gewährleistet ist oder dass eine zugestellte Backzange in einer Heizeinrichtung vorgeheizt wird, damit zur Aufnahme neuen Backteiges die Temperaturkonstanz eingehalten wird. Gegebenenfalls ist vorgesehen, dass die Backzangen eine untere Backform und eine obere Backform aufweisen, die jeweils um eine Backzangenachse zwischen einer um 180° offenen Offenstellung und einer geschlossenen Schließstellung bewegbar und in geschlossener Stellung arretierbar sind und dass die Beschickungsvorrichtung zumindest eine Teigbeschickungsvorrichtung zum Beschicken der unteren und oberen Backformen in aufgeklappter Stellung und zumindest eine Füllmassebeschickungsvorrichtung zum Auftragen der Füllmasse auf die mit Teig beschickte Lage der unteren und/oder oberen Backform aufweist. Gegebenenfalls ist vorgesehen, dass die Backzangenachsen quer zur Förderrichtung des Endlosförderers, bevorzugt in einem Winkel von 90° dazu angeordnet sind. Gegebenenfalls ist vorgesehen, dass zum Auf- und Zuklappen der Backzangen für jede Backzange eine Klappvorrichtung vorgesehen ist, wobei die Klappvorrichtungen entsprechend der jeweiligen Stellung entlang des Endlosförderers gesteuert werden, sodass die Backzangen in Geschlossenstellung oder Offenstellung bewegt werden und dass die Klappvorrichtungen zum Öffnen und Schließen der Backzangen insbesondere vor der Produktentnahmestation und vor dem Eintritt in den Backraum angeordnet sind.

Gegebenenfalls ist vorgesehen, dass die Backzangen auf dem Endlosförderer hintereinander angeordnet in Förderrichtung von der Beschickungs- und Entnahmestation in den Backraum und nach Passieren der Umlenkrolle wieder zurück zur Beschickungs- und Entnahmestation bewegt sind, und dass die Backzangen durch die zweite Umlenkrolle wieder in den oberen Abschnitt des Endlosförderers gebracht sind, wobei die jeweilige Backzange im unteren Abschnitt des Endlosförderers wieder aus dem Backraum austritt und nach Passieren der Umlenkrolle geöffnet wird, um die Produkte entnehmen zu können. Gegebenenfalls ist vorgesehen, dass Backzangenwägen vorgesehen sind, die zu beiden Seiten Laufräder aufweisen, mit denen sie auf Laufschienen des Backofens laufen.

Nachfolgend wird die Erfindung anhand der Zeichnungen näher erläutert.
Fig. 1 a und 1 b zeigen schematisch die Seitenansicht einer Backvorrichtung,
Fig. 2a und 2b zeigen die Aufsicht auf die Backvorrichtung,
Fig. 3a und 3b sind ein vergrößerter Schnitt gemäß Linie III.III in Fig. 1,
die Figuren 4a, 4b, und 5a, 5b zeigen zwei Darstellungen des Zangenwagens,
Figuren 6 und 7 zeigen schematisch die Backplatten des Zangenwagens in verschiedenen Funktionsstellungen,
Fig. 8 zeigt schematisch die Seitenansicht des im Backraum befindlichen Endes des Endlosförderers mit schematischer Darstellung der Abnahmevorrichtung und Zuführvorrichtung für die Backzangen,
Fig. 9a und 9b zeigt die Produktabnahmestation am gemäß Fig. 1 linken Ende des Endlosförderers.

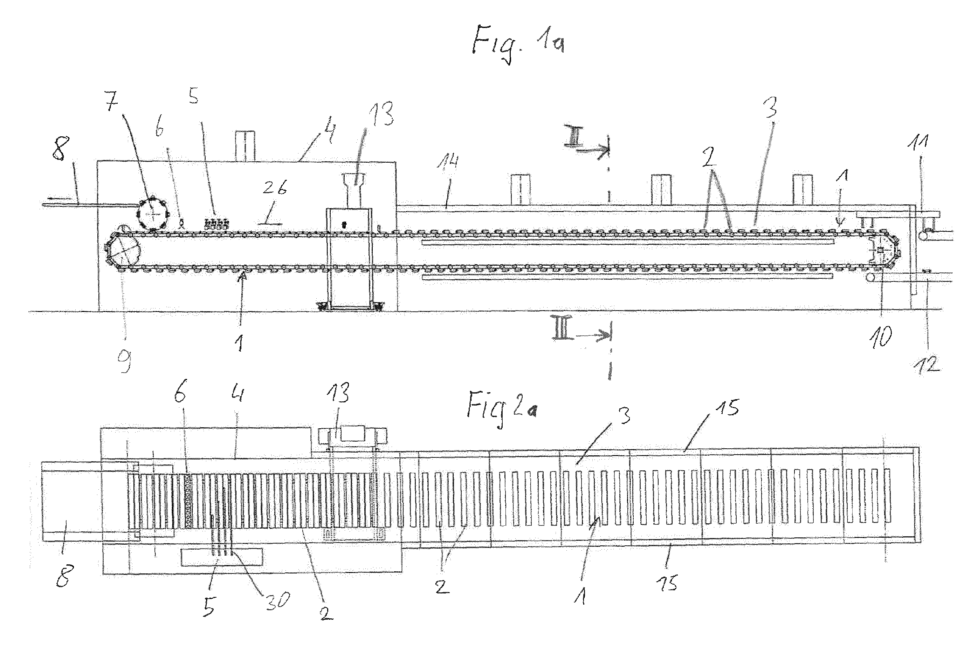

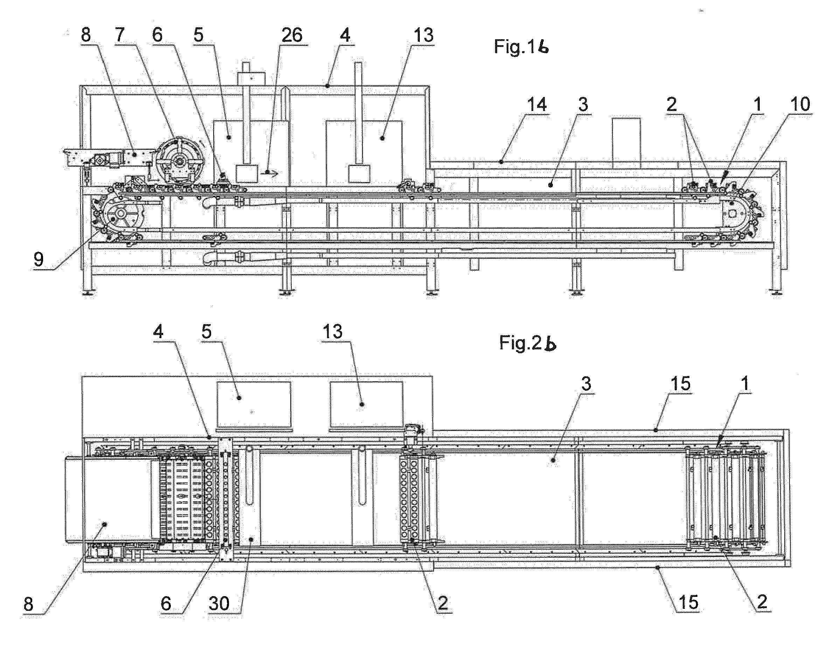

Die Figuren 1 a und b sind anhand der Angaben in der Bezugszeichenliste von selbst verständlich, der Endlosförderer 1 bewegt die auf ihm hintereinander angeordneten Backzangen 2 in Förderrichtung 26 von der Beschickungs- und Entnahmestation 4 in den Backraum 3 und nach Passieren der Umlenkrolle 10 wieder zurück zur Beschickungs- und Entnahmestation. Die zweite Umlenkrolle 9 bringt die Backzangen wieder in den oberen Abschnitt des Endlosförderers. Der Förderantrieb erfolgt zumindest über eine der beiden Umlenkrollen 9 und/oder 10.

Die über den größten Teil des Umlaufes des Endlosförderers geschlossenen Backzangen werden nach Passieren der Umlenkrolle 9 aufgeklappt, sodass die obere und untere Backform jeder Backzange in 180° Stellung zu liegen kommen und die zugehörigen Backformausnehmungen von oben zugänglich sind. Die Produktabnahmevorrichtung 7 entnimmt das gefüllte Backprodukt bevorzugt aus der unteren Backform und legt sie auf den Produktförderer ab, von welchem die Backprodukte der weiteren Verarbeitung wie Abkühlstation, Verpackung etc. zugeführt werden.

Die geöffneten Backzangen durchlaufen die Trennmittelspraystation 6 und werden daraufhin in der Teigbeschickungsvorrichtung 5 befüllt, wobei die Backformausnehmungen der unteren Backform und der oberen Backform entsprechend mit Teig versehen werden. Wie in Fig. 2a und 2b erkennbar ist, sind bei diesem Beispiel vier Teigzufuhrrohre 30 eingezeichnet, wodurch vier nebeneinanderliegende Backformausnehmungen pro Backform beschickt werden können.

Nach der Beschickung mit Teig kann gewünschtenfalls ein Vorbacken beispielsweise der unteren Backform erfolgen, um diesem Teigteil eine festere Konsistenz zu geben.

In der Füllmassebeschickungsstation 13 wird auf die eingefüllten Teigschichten z.B. der unteren Backform, die Füllmasse aufgeschichtet und nach Passieren der Füllmassebeschickungsvorrichtung und vor Eintritt in den Backraum 3 werden die Backzangen fest geschlossen. Der weitere Backvorgang erfolgt dann im Backraum unter Einhaltung der erforderlichen Backzeit, bis die jeweilige Backzange im unteren Abschnitt des Endlosförderers wieder aus dem Backraum austritt und nach Passieren der Umlenkrolle 9 geöffnet wird, um die Produkte entnehmen zu können.

In Fig. 1 a und 1b ist am backraumseitigen hinteren Ende bei der Umlenkrolle 10 eine Backzangenabnahmevorrichtung 11 und eine Backzangenzustellvorrichtung 12 vorgesehen. Diese wahlweise vorgesehenen Vorrichtungen dienen dazu, schadhafte oder verschmutzte Backzangen während des Backvorgangs vom Endlosförderer abzunehmen und der weiteren Bearbeitung wie z.B. Reinigung zuzuführen. Gereinigte oder reparierte oder neue Backzangen können unmittelbar nach der Abnahme wieder an den leeren Platz des Endlosförderers zugestellt werden, sodass die lückenlose Aufeinanderfolge der Backzangen aus dem Endlosförderer immer sichergestellt ist. Die zugeführten neuen Backzangen werden vor der Übergabe vorgeheizt, damit Konstanz der Backtemperatur gewährleistet wird.

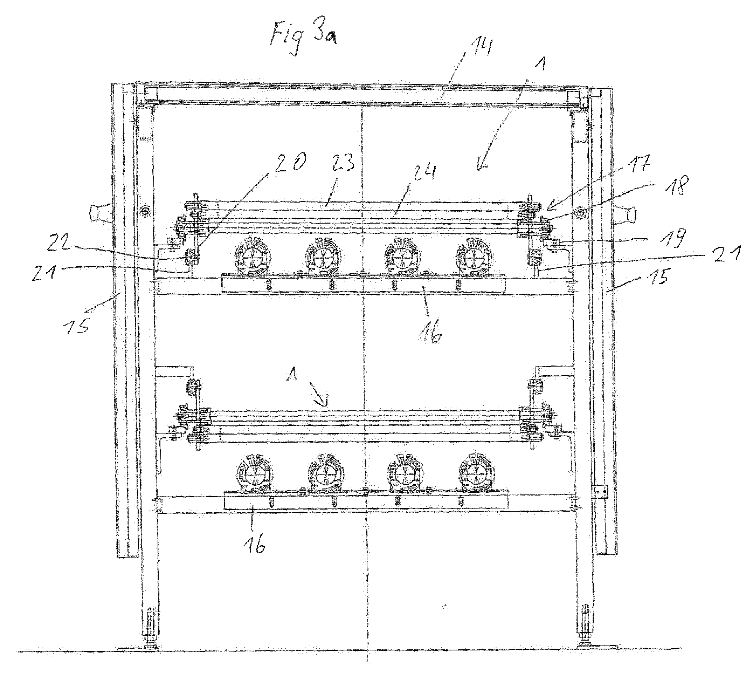

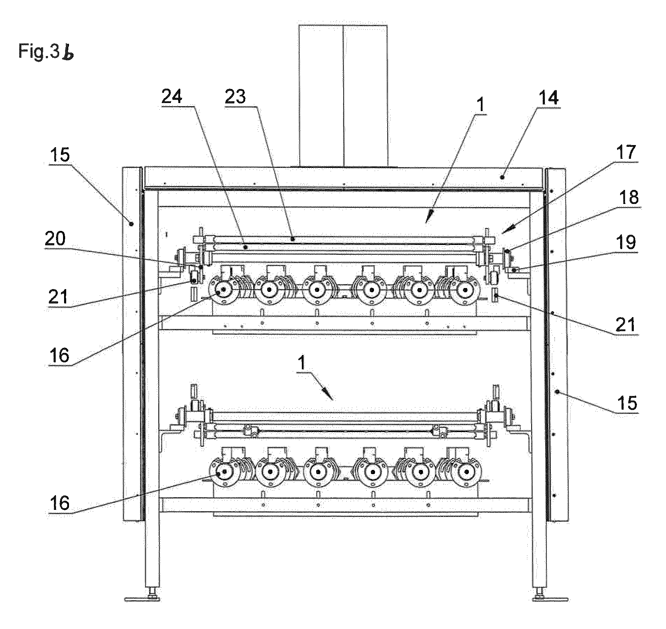

In Fig. 3a und 3b sind der obere und untere Abschnitt des Endlosförderers 1 im Schnitt zu sehen und auch diese Zeichnung ist weitgehend anhand der Beschreibung der Bezugszeichen verständlich. Eingezeichnet ist eine Heizung 16, die z.B. eine Gasheizung aber auch jede andere Heizungsart sein kann. Die Backzangenwägen 17 weisen zu beiden Seiten Laufräder 18 auf, mit denen sie auf den Laufschienen 19 des Backofens laufen. In Fig. 3a und 3b sind die Backzangen geschlossen, sodass die obere und untere Backform jeweils aufeinander liegen. Die später näher beschriebenen Arretierhebel 20 werden durch die Steuerschiene 21 gesteuert, wobei die Arretierhebel an den der Steuerschiene zugewandten Enden jeweils ein Steuerrad 22 aufweisen.

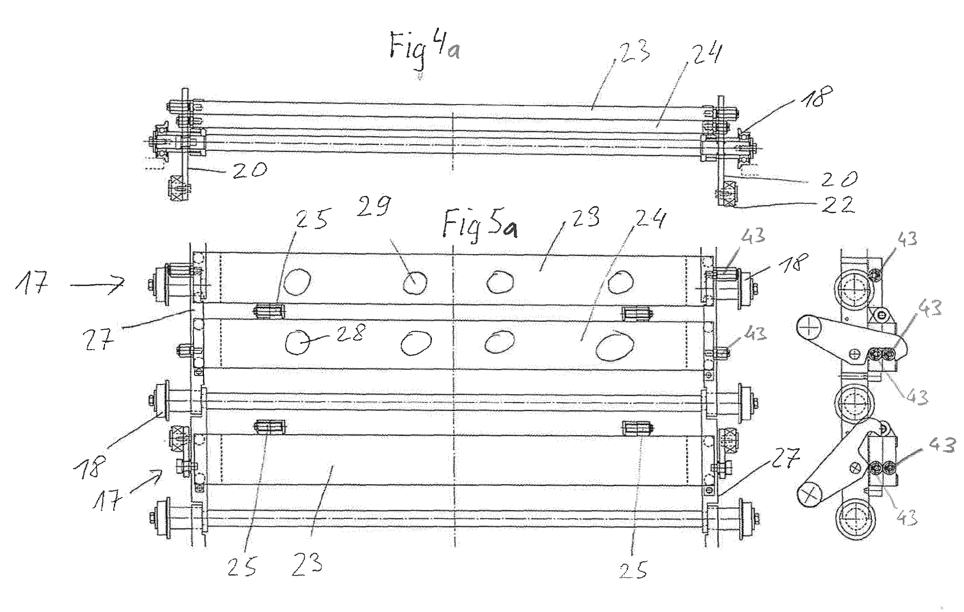

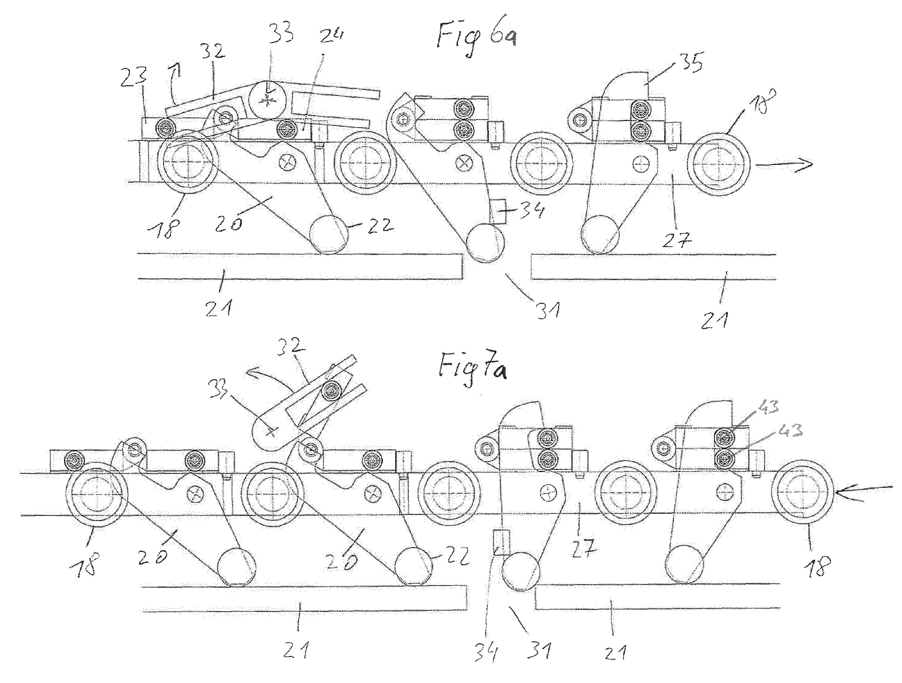

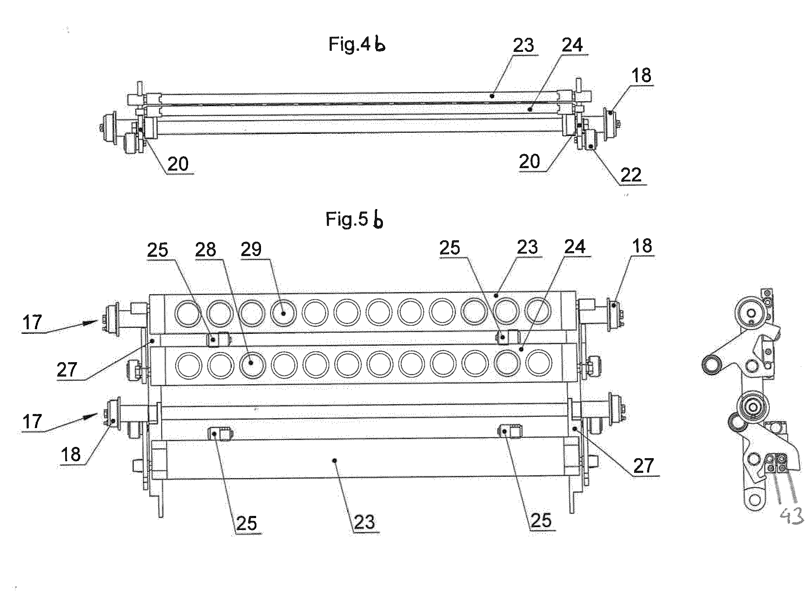

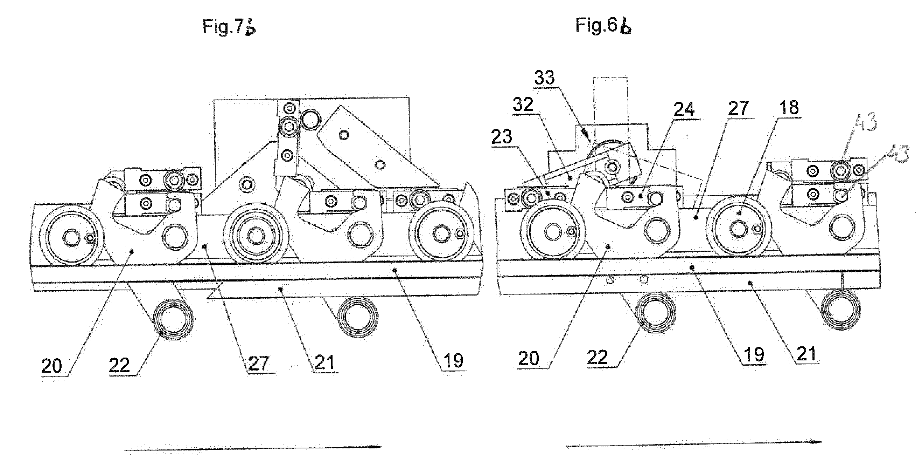

Die Fig. 4a, 4b, 5a und 5b zeigen den Aufbau des Backzangenwagens 17. Die Fig. 4a und 4b zeigen die Ansicht mit Blickrichtung in Förderrichtung. Die Fig. 5a und 5b zeigen die Aufsicht auf zwei aneinanderhängende Backzangenwägen, wobei die in der Fig. 5a und 5b oben eingezeichnete Backzange aufgeklappt und die untere Backzange zusammengeklappt ist. Die Schwenkachse für die obere Backform 23 und untere Backform 24 ist durch die Backzangenachsen 25 gegeben. Die Backzangen sitzen auf den beidseitigen Kettengliedern 27 des Endlosförderers und werden auf diesem in geschlossener Stellung durch Arretierhebel 20 festgehalten, wie dies anhand der Fig. 6a und 6b und 7 näher erläutert wird.

Fig. 6a zeigt drei verschiedene Funktionsstellungen des Arretierhebels 20. Der Arretierhebel 20 ist in der linken Stellung geöffnet und das Steuerrad 22 läuft auf der Steuerschiene 21. Wie ebenfalls eingezeichnet ist, greift die Gabel 32 der Klappvorrichtung 33 an der oberen Backform 23 an, die die Backzange zuklappt, und damit in die Stellung gelangt wie in Fig. 6a Mitte gezeichnet ist. Dabei gelangt der Arretierhebel 20 in eine Position, bei der die Steuerschiene 21 die Steuerlücke oder Steuerausnehmung 31 aufweist, und durch einen Blockierfinger 34 wird der sich nach rechts bewegende Arretierhebel 20 so weit verdreht, dass er mit seiner Arretiergabel 35 über die Haltestifte 43 die Backzange fest geschlossen und auch fest mit dem Kettenglied 27 des Endlosförderers verbunden hält. Durch die Steuerschiene 21 wird der Arretierhebel 20 in geschlossener Stellung gehalten, bis zufolge einer weiteren Steuerlücke der Arretierhebel 20 geöffnet und mittels der Klappvorrichtung 33 die obere Backform wieder in die horizontale Lage gebracht wird, wie dies zur Entnahme des Backproduktes notwendig wird. Den Vorgang des Öffnens zeigt die Fig. 7a und 7b, wobei die Bewegungsrichtung aber in die andere Richtung nach links gerichtet ist.

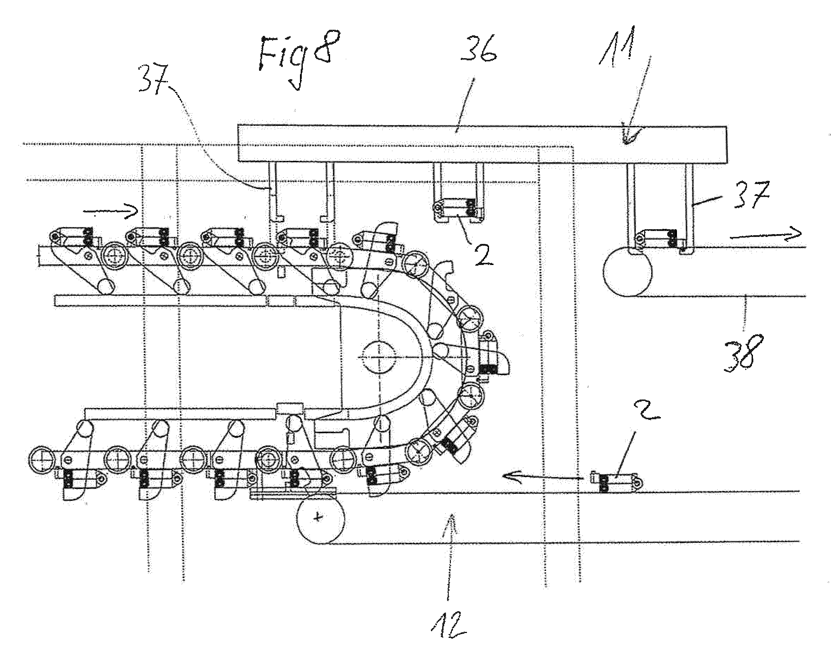

Die Fig. 8 zeigt die Arbeitsweise der Backzangenabnahmevorrichtung und der zugehörigen Backzangenzustellvorrichtung.

Wenn eine Backzange aus dem Backprozess entfernt und durch eine andere Backzange ersetzt werden soll, was z.B. durch entsprechende Sensoren festgestellt werden kann, erfolgt das Öffnen des Arretierhebels und Freigabe der Backzange. Auf einem Greiferbalken 36 sind verfahrbare und absenk- bzw. anhebbare Greiffinger 37 vorgesehen, die hier in drei verschiedenen Stellungen gezeigt sind. In der linken Stellung werden die Greiffinger 37 abgesenkt und ergreifen die auszutauschende Backzange. Die Backzange wird vom Endlosband abgehoben und nach rechts aus dem Backraum herausbefördert sowie zur nachfolgenden Bearbeitung einer Transportvorrichtung 38 übergeben. Auf dem Endlosförderer entsteht dadurch eine Lücke in der Aufeinanderfolge der Backzangen, die wieder geschlossen werden soll.

Wie in Fig. 8 unten eingezeichnet, wird eine neue Backzange durch den Zustellförderer 39 an den unteren Abschnitt des Endlosförderers herangefahren, wird von den Arretierhebeln arretiert und somit die Lücke wieder geschlossen. Bevorzugt wird die zugestellte Backzange in einer Heizeinrichtung vorgeheizt, damit zur Aufnahme neuen Backteiges die Temperaturkonstanz eingehalten wird.

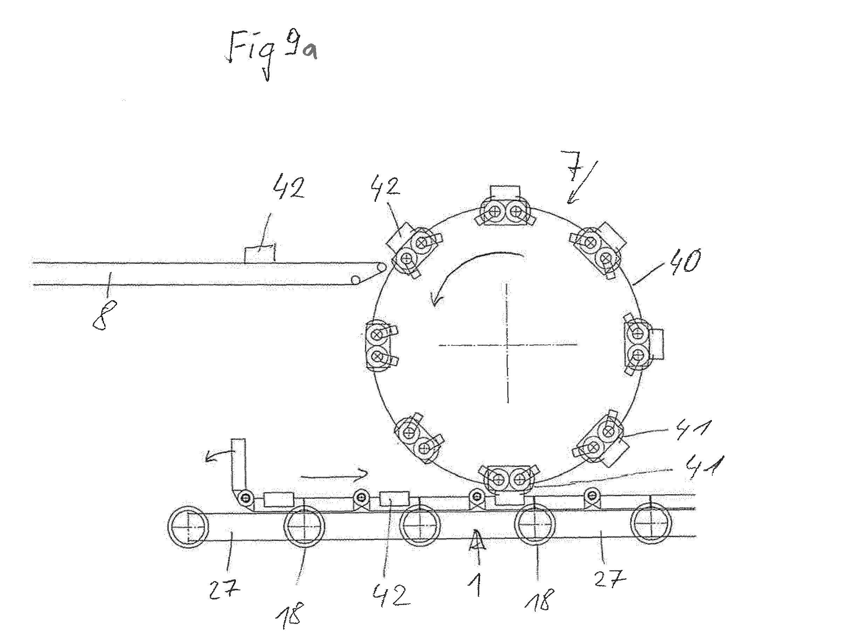

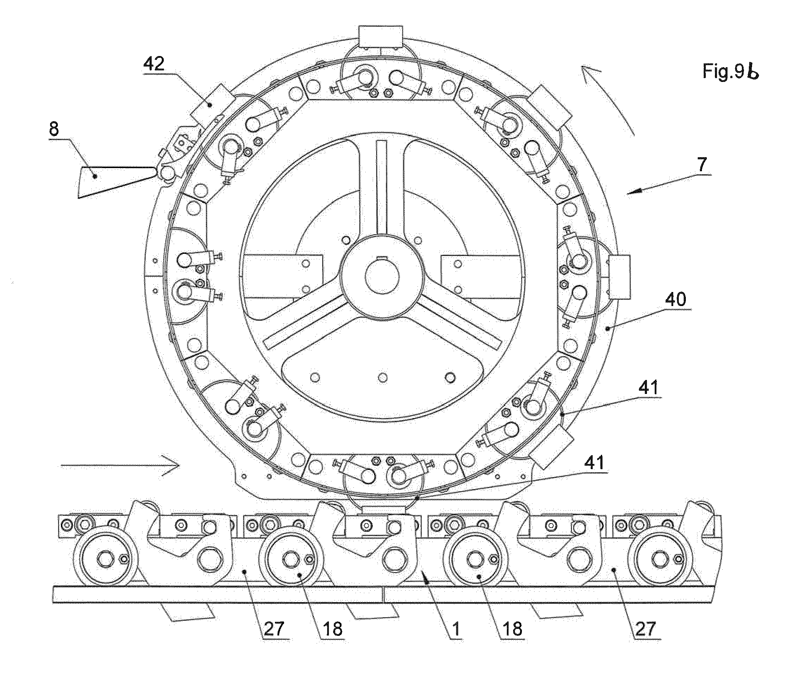

Die Fig. 9 zeigt die Produktabnahmevorrichtung 7 mit einer Abnahmetrommel 40, die in an sich bekannter Weise über Nadelabnehmer 41 das Produkt 42 entnimmt und auf den Produktförderer 8 ablegt.

Gemäß einer bevorzugten Ausführungsform, wie auch ausschnittsweise in Fig. 8 b dargestellt, ist die Backvorrichtung als Backvorrichtung mit umlaufenden Backzangen ausgeführt. Die Backzangen umfassen eine obere Backform 23 und eine untere Backform 24. In zusammengeklappter Stellung bildet die Backzange 2 bzw. deren obere Backform 23 und untere Backform 24 eine Backform, in der eine eingebrachte Backmasse wie beispielsweise ein Teig ausgebacken oder gebacken werden kann. Die Backzangen sind gegebenenfalls an einem Endlosförderer 1 festgelegt, um entlang des Verlaufs des Endlosförderers durch die Backvorrichtung bewegt werden zu können. Insbesondere umfasst die Backvorrichtung einen Backraum 3. Der Endlosförderer mit den Backzangen 2 erstreckt sich durch den Backraum 3, wodurch bei bewegtem Endlosförderer die Backzangen 2 durch den Backraum bewegt werden. Der Endlosförderer 1 ist um eine vordere Umlenkrolle 9 und eine hintere Umlenkrolle 10 geführt und umgelenkt. Die Drehachsen der beiden Umlenkrollen 9, 10 verlaufen im Wesentlichen waagrecht, wodurch ein oberer Abschnitt des Endlosförderers und ein unterer Abschnitt des Endlosförderers gebildet sind. Die beiden Abschnitte verlaufen im Wesentlichen parallel zueinander und übereinander.

Bei dem Backprozess wird in einem ersten Schritt zumindest eine Backzange geöffnet. In geöffneten Zustand durchläuft die Backzange eine Beschickungsstation, in der die Backmasse auf die obere und/oder die untere Backform aufgetragen wird. In weiterer Folge wird die Backzange geschlossen und gegebenenfalls verriegelt. In weiterer Folge wird die Backzange entlang des Endlosförderers durch den Backraum 3 gefördert. Bei der hinteren Umlenkrolle 10 wird die Backzange von dem oberen Abschnitt des Endlosförderers in den unteren Abschnitt des Endlosförderers bewegt. Bei auf dem Endlosförderer 1 liegenden Backzangen 2 ist es von Nöten, dass bei diesem Wechsel von dem oberen Abschnitt des Endlosförderers in den unteren Abschnitt des Endlosförderers und einer gegebenenfalls bewirkten Drehung der Backzangen um 180° die Backzangen 2 mit dem Endlosförderer verbunden sind, sodass sich die Backzangen nicht von dem Endlosförderer lösen können. Dazu ist eine lösbare mechanische Verbindung vorgesehen, über die die Backzange mit dem Endlosförderer verbunden werden können und/oder verbunden sind. Diese lösbare mechanische Verbindung ist beispielsweise eine Arretiervorrichtung, ein Arretierhebel oder eine Arretiergabel. Die lösbare mechanische Verbindung ist insbesondere durch eine Steuerung lösbar und/oder verbindbar. Beispielsweise weist die Backvorrichtung eine Steuerschiene auf, die zur Bewegung und/oder Steuerung der lösbare mechanische Verbindung und insbesondere der Arretiervorrichtungen geeignet ist. Beispielsweise weisen die Arretierhebel 20 der Arretiervorrichtungen ein Steuerrad 22 auf, das an einer Steuerschiene 21 abrollt oder diese abtastet. Die Steuerschiene weist gegebenenfalls eine Steuerlücke oder Steuerausnehmung 31 auf, durch die der Arretierhebel verdreht wird, wodurch einerseits die Backzange fest geschlossen werden kann und/oder andererseits eine Verbindung der Backzange mit dem Endlosförderer erfolgt. Gegebenenfalls ist die Steuerlücke oder die Steuerausnehmung 31 geschlossen, wodurch keine Änderung des Zustands der Arretiervorrichtung bewirkt wird. Erfindungsgemäß können die Backzangen bei laufender Backvorrichtung entnommen werden und bevorzugt ohne, dass der Endlosförderer angehalten werden muss. Dazu kann die lösbare mechanische Verbindung gelöst werden. In weiterer Folge kann die Backzange von einer Entnahmestation von dem Endlosförderer abgenommen werden. Nach der Entnahmestation kann die Backzange beispielsweise gereinigt oder bearbeitet werden. Gegebenenfalls wird durch die Beschickungsstation eine neue Backzange zugeführt. Gegebenenfalls wird diese Backzange vor der Verbindung mit dem Endlosförderer vorgewärmt. Die Entnahmestation umfasst beispielsweise den Greifbalken 36 bzw. Greiffinger, über die die Backzange von dem Endlosförderer entfernt werden können. Die Entnahme der Backzange von dem Endlosförderer erfolgt bevorzugt automatisiert.

Die Beschickungsstation umfasst gegebenenfalls einen Zustellförderer, über den die neuen oder die gereinigten Backzangen zugeführt werden können. Die Zugeführung der Backzange auf den Endlosförderer erfolgt bevorzugt automatisiert.

Die Backzangen sind in bevorzugter Weise am oberen Abschnitt des Endlosförderers auf dem Endlosförderer liegend angeordnet. Im unteren Abschnitt des Endlosförderers sind die Backzangen bevorzugt unterhalb des Endlosförderers hängend mit dem Endlosförderer verbunden. In dieser Ausführungsform sind die Backzangen an jeder Position des Endlosförderers an dessen Außenseite angeordnet. In bevorzugter Weise sind die Arretierhebel 20 bzw. ist die Arretiervorrichtung derart ausgebildet, dass dadurch einerseits die Backzange mit dem Endlosförderer verbunden werden kann.

Andererseits kann die Arretiervorrichtung bzw. können die Arretierhebel derart ausgebildet sein, dass dadurch die Backzange in geschlossenem Zustand arretiert wird. Bevorzugt ist bei jeder Backzange zumindest einseitig ein Arretierhebel 20 vorgesehen. Besonders bevorzugt sind beidseitig der Backzange zwei Arretierhebel 20 pro Backzange vorgesehen.

Die Arretierhebel 20 sind gemäß einer bevorzugten Ausführungsform über eine Drehachse mit dem Endlosförderer verbunden. Die Drehachse verläuft bevorzugt normal zur Bewegungsrichtung der jeweiligen Backzange, besonders bevorzugt parallel zu den Drehachsen der Umlenkrollen. Der Endlosförderer ist beispielsweise durch Kettenglieder 27 gebildet, die entlang der Bewegungsrichtung des Endlosförderers aneinandergereiht und um die Umlenkrollen umgelenkt sind. Der Arretierhebel 20 umfasst zwei von der Drehachse auskragende Hebelabschnitte. An einem Hebelabschnitt ist das Steuerrad 22 vorgesehen. Dieses Steuerrad rollt an der Steuerschiene 21 ab. Durch die Ausgestaltung der Steuerschiene 21 kann die Verdrehung des Arretierhebels 20 um die Drehachse gesteuert werden. Dazu ist beispielsweise eine Steuerlücke 31 vorgesehen, die gegebenenfalls geschlossen werden kann. Ist die Steuerlücke vorhanden, so wird der Arretierhebel 20 um die Drehachse gedreht, womit auch der auf der anderen Seite auskragende Teil des Arretierhebels 20 seine Position ändert. Dieser auskragende Teil, der an der gegenüberliegenden Seite des Steuerrads 22 angeordnet ist, umfasst die Arretiergabel 35. Die Arretiergabel 35 ist dazu eingerichtet, die Backzange zu arretieren. Durch die Arretierung wird die Backzange mit dem Endlosförderer verbunden und/oder die Backzange in einer geschlossenen Stellung gehalten. Ist die Steuerlücke jedoch geschlossen, wie beispielsweise in Fig. 8 dargestellt, so geschieht keine Bewegung des Arretierhebels 20 zur Änderung der mechanischen Verbindung zwischen der Backzange und dem Endlosförderer. Die Backzangen werden in diesem Fall in herkömmlicher Weise verbunden mit dem Endlosförderer durch den Backraum gefördert. Ist jedoch die Steuerung darauf ausgelegt, die mechanische Verbindung zu lösen, so kann in weiterer Folge die nicht arretierte Backzange durch die Entnahmevorrichtung von dem Endlosförderer abgenommen werden. Alternativ zu einer Steuerlücke kann auch eine alternative Geometrie der Steuerschiene eine Verdrehung des Arretierhebels bewirken. Die Geometrie bzw. der Verlauf der Steuerschiene ist veränderbar ausgeführt, sodass jede einzelne Backzange wahlweise arretiert oder freigegeben wird.

Somit besteht durch die Konstruktion eine lösbare mechanische Verbindung zwischen der Backzange und dem Endlosförderer, die darüber hinaus eine steuerbare lösbare mechanische Verbindung ist.

Gegebenenfalls betrifft die Erfindung eine Backvorrichtung zur Herstellung von Backprodukten, insbesondere zur Herstellung gefüllter Backprodukte, wobei die Backvorrichtung auf- und zuklappbare Backzangen aufweist, die auf einem in Längsrichtung des Backofens umlaufenden und kontinuierlich bewegten Endlosförderer von einer Beschickungsvorrichtung durch den Backraum des Backofens und zu einer Produktabnahmevorrichtung bewegbar sind, wobei die Backzangen eine untere Backform und eine obere Backform aufweisen, die jeweils um eine Backzangenachse zwischen einer Offenstellung und einer geschlossenen Schließstellung bewegbar sind, die sich dadurch auszeichnet, dass die Backzangen über lösbare mechanische Verbindungen mit dem Endlosförderer verbunden sind, dass die Backvorrichtung an zumindest einer Stelle des Endlosförderers eine Backzangenentnahmestation aufweist, an der Backzangen entnommen und wieder aufgesetzt werden können und dass die Abnahme und das Wiederzustellen der Backzangen am kontinuierlich bewegten Band erfolgt.

Gegebenenfalls ist vorgesehen, dass die lösbare mechanische Verbindung durch eine Arretiervorrichtung gebildet ist und dass die Arretiervorrichtungen und deren Bewegungen von einer Steuerschiene gesteuert sind.
Gegebenenfalls ist vorgesehen, dass die Backzangen in geschlossener Stellung durch die Arretiervorrichtungen schließbar oder geschlossen sind und dass die Backzangen durch die Arretiervorrichtungen mit dem Endlosförderer fest verbindbar oder verbunden sind.
Gegebenenfalls ist vorgesehen, dass Arretierhebel vorgesehen sind, die durch die Steuerschiene gesteuert sind und dass die Arretierhebel an den der Steuerschiene zugewandten Enden jeweils ein Steuerrad aufweisen.

Gegebenenfalls ist vorgesehen, dass die Backzangen auf Kettengliedern des Endlosförderers befestigt oder befestigbar sind.
Gegebenenfalls ist vorgesehen, dass die Backzangen auf den beidseitigen Kettengliedern des Endlosförderers sitzen und auf diesem in geschlossener Stellung durch Arretierhebel festgehalten sind. Gegebenenfalls ist vorgesehen, dass die Freigabe der Backzange durch das Öffnen des Arretierhebels erfolgt. Gegebenenfalls ist vorgesehen, dass die Backzange Haltestifte umfasst und dass der Arretierhebel die Backzange gegebenenfalls mit seiner Arretiergabel über die Haltestifte fest geschlossen und auch fest mit dem Kettenglied des Endlosförderers verbunden hält. Gegebenenfalls ist vorgesehen, dass am backraumseitigen hinteren Ende bei der Umlenkrolle eine Backzangenabnahmevorrichtung und eine Backzangenzustellvorrichtung vorgesehen sind. Gegebenenfalls ist vorgesehen, dass die Backzangenabnahmevorrichtung einen Greifbalken umfasst, auf dem verfahrbare und absenk- bzw. anhebbare Greiffinger vorgesehen sind, sodass eine Backzange vom Endlosband abgehoben und aus dem Backraum herausbefördert werden kann sowie zur nachfolgenden Bearbeitung einer Transportvorrichtung übergeben werden kann. Gegebenenfalls ist vorgesehen, dass auf dem Greiferbalken verfahrbare und absenk- bzw. anhebbare Greiffinger vorgesehen sind, die abgesenkt werden können um in die auszutauschende Backzange einzugreifen und um die Backzange vom Endlosband abzuheben, aus dem Backraum herauszubefördern und zur nachfolgenden Bearbeitung einer Transportvorrichtung zu übergeben. Gegebenenfalls ist vorgesehen, dass die Backzangenzustellvorrichtung einen Zustellförderer umfasst, über den eine neue Backzange bevorzugt an den unteren Abschnitt des Endlosförderers herangefahren wird. Gegebenenfalls ist vorgesehen, dass die zugeführten neuen Backzangen vor der Übergabe vorgeheizt werden oder sind, sodass eine Konstanz der Backtemperatur gewährleistet ist oder dass eine zugestellte Backzange in einer Heizeinrichtung vorgeheizt wird, damit zur Aufnahme neuen Backteiges die Temperaturkonstanz eingehalten wird.

Gegebenenfalls betrifft die Erfindung eine Backvorrichtung zur Herstellung gefüllter Backprodukte gemäß der vorangegangenen Beschreibung, die sich dadurch auszeichnet, dass die Backzangen eine untere Backform und eine obere Backform aufweisen, die jeweils um eine Backzangenachse zwischen einer um 180° offenen Offenstellung und einer geschlossenen Schließstellung bewegbar und in geschlossener Stellung arretierbar sind und dass die Beschickungsvorrichtung zumindest eine Teigbeschickungsvorrichtung zum Beschicken der unteren und oberen Backformen in aufgeklappter Stellung und zumindest eine Füllmassebeschickungsvorrichtung zum Auftragen der Füllmasse auf die mit Teig beschickte Lage der unteren und/oder oberen Backform aufweist.
Gegebenenfalls ist vorgesehen, dass die Backzangenachsen quer zur Förderrichtung des Endlosförderers, bevorzugt in einem Winkel von 90°, dazu angeordnet sind. Gegebenenfalls ist vorgesehen, dass zum Auf- und Zuklappen der Backzangen für jede Backzange eine Klappvorrichtung vorgesehen ist, wobei die Klappvorrichtungen entsprechend der jeweiligen Stellung entlang des Endlosförderers gesteuert werden, sodass die Backzangen in Geschlossenstellung oder Offenstellung bewegt werden und dass die Klappvorrichtungen zum Öffnen und Schließen der Backzangen insbesondere vor der Produktentnahmestation und vor dem Eintritt in den Backraum angeordnet sind. Gegebenenfalls ist vorgesehen, dass die Backzangen auf dem Endlosförderer hintereinander angeordnet in Förderrichtung von der Beschickungs- und Entnahmestation in den Backraum und nach Passieren der Umlenkrolle wieder zurück zur Beschickungs- und Entnahmestation bewegt sind und dass die die Backzangen durch die zweite Umlenkrolle wieder in den oberen Abschnitt des Endlosförderers gebracht sind, wobei die jeweilige Backzange im unteren Abschnitt des Endlosförderers wieder aus dem Backraum austritt und nach Passieren der Umlenkrolle geöffnet wird, um die Produkte entnehmen zu können. Gegebenenfalls ist vorgesehen, dass Backzangenwägen vorgesehen sind, die zu beiden Seiten Laufräder aufweisen, mit denen sie auf Laufschienen des Backofens laufen.

Die erfindungsgemäße Backvorrichtung umfasst eine Backzangenentnahmestation. In dieser Backzangenentnahmestation können einzelne Backzangen -bevorzugt automatisiert - von dem Endlosförderer abgenommen werden. Zusätzlich können einzelne Backzangen dem Endlosförderer - bevorzugt automatisiert - wieder zugeführt werden. Die Backzangenentnahmestation umfasst somit eine Backzangenentnahmevorrichtung und eine Backzangenzustellvorrichtung. Gegebenenfalls können diese beiden Vorrichtungen - also die Backzangenentnahmevorrichtung und die Backzangenzustellvorrichtung - als eine einzige Vorrichtung ausgeführt sein. Beispielsweise können herkömmliche Industrieroboter dazu verwendet werden, Backzangen abzunehmen und wieder zuzuführen. Dazu sind, wie weiter oben beschrieben, Greiffinger vorgesehen, die derart mit der Backzange in Wirkkontakt gebracht werden können, sodass eine formschlüssige oder eine reibschlüssige Verbindung hergestellt ist. Über die Kinematik der Backzangenentnahmevorrichtung und/oder der Backzangenzustellvorrichtung können die Backzangen entnommen oder zugeführt werden. Ferner können auch, wie weiter oben beschrieben, Förderbänder zur Abnahme und/oder zur Zustellung von Backzangen eingerichtet sein. Gegebenenfalls sind, wie weiter oben beschrieben, Greiferbalken vorgesehen, entlang derer Greiffinger verfahrbar angeordnet sind, sodass die Backzangen bewegbar und insbesondere von dem Endlosförderer abnehmbar und zustellbar sind.

Gegebenenfalls ist vorgesehen, inbesondere wie in den der Ausführungsform gemäß den Figuren 1b, 3b, 6b, 7b, dass die Arretierhebel bzw. ist die Arretiervorrichtung von einer Steuerschiene gesteuert sind. Diese weist gemäß vorangegangener Beschreibung eine Steuerlücke auf, um eine Bewegung und dadurch eine Steuerung der Elemente der Arretiervorrichtung zu bewirken. Diese Steuerlücke kann entweder als Lücke im herkömmlichen Sinn ausgebildet sein. Jedoch entspricht es ebenfalls dem Erfindungsgedanken, dass die Lücke von einer Erhebung begrenzt ist, die dazu ausgebildet ist die Arretiervorrichtung zu steuern. Gegebenenfalls wird diese Erhebung ausgefahren oder eingefahren, sodass eine Steuerung der Arretiervorrichtung geschieht.

In allen Ausführungsformen ist gegebenenfalls vorgesehen, dass eine Steuerung für die Arretiervorrichtung vorgesehen ist. Diese Steuerung weist insbesondere zwei Stellungen auf. In einer ersten Stellung werden die Arretiervorrichtungen bzw. die Arretierhebel bewegt, sodass die Backzangen mit dem Endlosförderer verbunden sind oder werden. In einer zweiten Steuerstellung bleiben die Arretiervorrichtungen bzw. die Arretierhebel geöffnet, sodass Backzangen entnommen oder zugeführt werden können.

Gegebenenfalls ist in allen Ausführungsformen vorgesehen, dass die Arretiervorrichtungen die zugeklappten Backzangen in zugeklappter Stellung halten. Insbesondere werden die Backplatten in zugeklappter Stellung gehalten, wenn sie am hinteren Umlenkpunkt umgelenkt werden, um entlang der unteren Förderfläche transportiert zu werden. In dieser Stellung wirken die Arretiervorrichtungen derart, dass ein selbsttätiges Aufklappen der Backzangen, bewirkt durch die Schwerkraft, verhindert ist. Gegebenenfalls ist in allen Ausführungsformen vorgesehen, dass die Arretiervorrichtungen dazu eingerichtet sind, die Backzangen zu schließen. Auch diese Schließbewegung ist insbesondere durch die Steuerung der Arretiervorrichtung gegeben. Gegebenenfalls ist in allen Ausführungsformen vorgesehen, dass die Steuerung der Arretiervorrichtung über eine Steuerschiene erfolgt. Gegebenenfalls ist in allen Ausführungsformen vorgesehen, dass die Backzangen im oberen Bereich des Endlosförderers auf dem Endlosförderer liegen, jedoch gegen ein Abheben nach oben nicht gesichert sind. Dadurch können die Backzangen von der Backzangeentnahmestation einfach entnommen werden. Erst knapp vor oder am hinteren Umlenkpunkt werden die Backzangen mit dem Endlosförderer derart verbunden, dass sie auch im unteren Bereich des Endlosförderers nicht von diesem getrennt werden können oder auch, dass diese in diesem Bereich nicht selbsttätig aufklappen. Gegebenenfalls ist in allen Ausführungsformen vorgesehen, dass die Steuerung der Backzangenabnahmestation mit der Steuerung der Backmaschine gekoppelt ist, sodass eine synchronisierte Abnahme und Zuführung der Backzangen ermöglicht ist.

Gegebenenfalls ist in allen Ausführungsformen eine Detektionseinheit vorgesehen. Diese Detektionseinheit, beispielsweise eine Bildverarbeitungseinheit, eine Bildaufnahmeeinheit oder ein anderer Sensor, sind bevorzugt dazu geeignet und/oder eingerichtet, den Zustand jeder einzelnen Backplatte zu detektieren. Beispielsweise kann durch eine Bildanalyseeinheit der Verschmutzungsgrad einer Backzange und insbesondere der Backform festgestellt werden. Im Falle einer Verschmutzung, kann die Backzange in der Backzangenstation entnommen werden. Auch diese Sensoren oder Detektoren sind mit der Steuerung der Backmaschine gekoppelt.

Gegebenenfalls kann in allen Ausführungsformen vorgesehen sein, dass die Backzangenentnahmestation dazu verwendet wird, einen Produktwechsel vorzunehmen. Auf einer Type von Backzangen ist die Form der Backformen im Wesentlichen nicht veränderbar. Soll beispielsweise die Form der herzustellenden Backprodukte verändert werden, so müssen neue, bzw. andere Backformen zugestellt werden. Um den Produktwechsel automatisiert durchführen zu können, können alle Backzangen nach der Reihe entnommen werden. Die dadurch entstandenen Lücken auf dem Endlosförderer können durch neue bzw. andere Backzangen wieder aufgefüllt werden. Dadurch ist ein vollautomatisierter Produktwechsel während des laufenden Betriebs, jedoch ohne Teigaufguss, ermöglicht.

Gemäß einer weiteren Ausführungsform, ist die Vorbackvorrichtung lediglich ein Abschnitt der Backmaschine, der zwischen dem Teigaufguss und einem späteren Aufguss einer Füllung angeordnet ist. Durch die heißen Backplatten kommt es zu einem Vorbacken der Backmasse in den Backformen.

Gegebenenfalls ist vorgesehen, dass die Backzangen im oberen Bereich des Endlosförderers sowohl abgenommen als auch zugeführt werden. Gegebenenfalls ist vorgesehen, dass die Backzangen im oberen Bereich abgenommen und im unteren Bereich zugeführt werden. Gegebenenfalls ist vorgesehen, dass die Backzangen nach oder beim Zuführen durch die Arretiervorrichtung mit dem Endlosförderer verbunden werden und/oder in geschlossener Stellung arrtiert werden.

Gegebenenfalls ist vorgesehen, dass mehrere Steuerlücken oder Steuerstellen vorgesehen sind. Bevorzugt eine zum Abheben der Backzangen und eine zum Eingliedern der Backzangen.

Gegebenenfalls ist vorgesehen, dass eine Rampenfläche vorgesehen ist, die sich von der Steuerschiene erhebt, sodass das Steuerrad gegebenenfalls auf dieser Rampenfläche abrollt, um die Arretiervorrichtung oder deren Arretierhebel zu bewegen. Diese Rampenfläche ist gegebenenfalls bewegbar und insbesondere zwischen zwei Steuerstellungen bewegbar.

### Bzgz 51 845

- 1: Endlosförderer
- 2: Backzangen
- 3: Backraum
- 4: Beschickungs- und Entnahmestation
- 5: Teigbeschickungsvorrichtung
- 6: Trennmittelspray
- 7: Produktabnahmevorrichtung
- 8: Produktförderer
- 9: Umlenkrolle vorne
- 10: Umlenkrolle hinten
- 11: Backzangenabnahmevorrichtung
- 12: Backzangenzustellvorrichtung
- 13: Füllmassebeschickungsvorrichtung
- 14: obere Ofenraumabdeckung
- 15: seitliche Ofenraumabdeckung
- 16: Heizung
- 17: Backzangenwagen
- 18: Laufräder
- 19: Laufschiene
- 20: Arretierhebel
- 21: Steuerschiene
- 22: Steuerrad
- 23: obere Backform
- 24: untere Backfom
- 25: Backzangenachse
- 26: Förderrichtung
- 27: Kettenglieder
- 28: Backformausnehmungen unten
- 29: Backformausnehmungen oben
- 30: Teigzufuhrrohre
- 31: Steuerlücke
- 32: Gabel
- 33: Klappvorrichtung
- 34: Blockierfinger
- 35: Arretiergabel
- 36: Greiferbalken
- 37: Greiffinger
- 38: Transportvorrichtung
- 39: Zustellförderer
- 40: Abnahmetrommel
- 41: Abnahmenadeln
- 42: Produkt
- 43: Haltetstift

## Patentansprüche

1. Backvorrichtung zur Herstellung von Backprodukten, insbesondere zur Herstellung gefüllter Backprodukte, wobei die Backvorrichtung auf- und zuklappbare Backzangen (2) aufweist, die auf einem in Längsrichtung des Backofens umlaufenden und kontinuierlich bewegten Endlosförderer (1) von einer Beschickungsvorrichtung (5) durch den Backraum (3) des Backofens und zu einer Produktabnahmevorrichtung (7) bewegbar sind, wobei die Backzangen (2) eine untere Backform (24) und eine obere Backform (23) aufweisen, die jeweils um eine Backzangenachse (25) zwischen einer Offenstellung und einer geschlossenen Schließstellung bewegbar sind, wobei die Backzangen (2) über lösbare mechanische Verbindungen mit dem Endlosförderer (1) verbunden sind,
**dadurch gekennzeichnet, dass** die Backvorrichtung an zumindest einer Stelle des Endlosförderers (1) eine Backzangenentnahmestation aufweist, an der Backzangen (2) entnommen und wieder aufgesetzt werden können,
und dass die Abnahme und das Wiederzustellen der Backzangen (2) am kontinuierlich bewegten Endlosförderer (1) erfolgt.

2. Backvorrichtung nach Anspruch 1, **dadurch gekennzeichnet, dass** die lösbare mechanische Verbindung durch eine Arretiervorrichtung gebildet ist und dass die Arretiervorrichtungen und deren Bewegungen von einer Steuerschiene (21) gesteuert sind.

3. Backvorrichtung nach Anspruch 1 oder 2, **dadurch gekennzeichnet, dass** die Backzangen (2) durch die Arretiervorrichtungen schließbar oder geschlossen sind und dass die Backzangen (2) durch die Arretiervorrichtungen mit dem Endlosförderer (1) fest verbindbar oder verbunden sind.

4. Backvorrichtung nach einem der Ansprüche 1 bis 3, **dadurch gekennzeichnet, dass** Arretierhebel (20) vorgesehen sind, die durch die Steuerschiene (21) gesteuert sind und dass die Arretierhebel (20) an den der Steuerschiene (21) zugewandten Enden jeweils ein Steuerrad (22) aufweisen.

5. Backvorrichtung nach einem der Ansprüche 1 bis 4, **dadurch gekennzeichnet, dass** die Backzangen (2) auf Kettengliedern (27) des Endlosförderers (1) befestigt oder befestigbar sind.

6. Backvorrichtung nach einem der Ansprüche 1 bis 5, **dadurch gekennzeichnet, dass** die Backzangen (2) auf den beidseitigen Kettengliedern (27) des Endlosförderers (1) sitzen und auf diesem in geschlossener Stellung durch Arretierhebel (20) festgehalten sind.

7. Backvorrichtung nach einem der Ansprüche 1 bis 6, **dadurch gekennzeichnet, dass** die Freigabe der Backzange (2) durch das Öffnen des Arretierhebels (20) erfolgt.

8. Backvorrichtung nach einem der Ansprüche 1 bis 7, **dadurch gekennzeichnet, dass** die Backzange (2) Haltestifte (43) umfasst und dass der Arretierhebel (20) die Backzange (2) gegebenenfalls mit seiner Arretiergabel (35) über die Haltestifte (43) fest geschlossen und auch fest mit dem Kettenglied (27) des Endlosförderers (1) verbunden hält

9. Backvorrichtung nach einem der Ansprüche 1 bis 8, **dadurch gekennzeichnet, dass** am backraumseitigen hinteren Ende, bei einer Umlenkrolle (10), eine die Backzangenabnahmevorrichtung (11) und die Backzangenzustellvorrichtung (12) enthaltende Backzangenentnahmestation vorgesehen sind.

10. Backvorrichtung nach einem der Ansprüche 1 bis 9, **dadurch gekennzeichnet, dass** die Backzangenabnahmevorrichtung (11) einen Greifbalken (36) umfasst, auf dem verfahrbare und absenk- bzw. anhebbare Greiffinger (37) vorgesehen sind, sodass eine Backzange (2) vom Endlosförderer (1) abgehoben und aus dem Backraum (3) herausbefördert werden kann sowie zur nachfolgenden Bearbeitung einer Transportvorrichtung (38) übergeben werden kann.

11. Backvorrichtung nach einem der Ansprüche 1 bis 10, **dadurch gekennzeichnet, dass** auf dem Greifbalken (36) verfahrbare und absenk- bzw. anhebbare Greiffinger (37) vorgesehen sind, die abgesenkt werden können, um in die auszutauschende Backzange (2) einzugreifen und um die Backzange (2) vom Endlosförderer (1) abzuheben, aus dem Backraum (3) herauszubefördern und zur nachfolgenden Bearbeitung einer Transportvorrichtung (38) zu übergeben.

12. Backvorrichtung nach einem der Ansprüche 1 bis 11, **dadurch gekennzeichnet, dass** die Backzangenzustellvorrichtung (12) einen Zustellförderer umfasst, über den eine neue Backzange (2) bevorzugt an den unteren Abschnitt des Endlosförderers (1) herangefahren wird und dass gegebenenfalls die herangefahrene Backzange über die Arretiervorrichtung mit dem Endlosförderer verbunden wird.

13. Backvorrichtung nach einem der Ansprüche 1 bis 12, **dadurch gekennzeichnet, dass** die zugeführten neuen Backzangen (2) vor der Übergabe vorgeheizt werden oder sind, sodass eine Konstanz der Backtemperatur gewährleistet ist oder dass eine zugestellte Backzange (2) in einer Heizeinrichtung vorgeheizt wird, damit zur Aufnahme neuen Backteiges die Temperaturkonstanz eingehalten wird.

14. Backvorrichtung zur Herstellung gefüllter Backprodukte nach einem der Ansprüche 1 bis 13, **dadurch gekennzeichnet, dass** die Backzangen (2) eine untere Backform (24) und eine obere Backform (23) aufweisen, die jeweils um eine Backzangenachse (25) zwischen einer um 180° offenen Offenstellung und einer geschlossenen Schließstellung bewegbar und in geschlossener Stellung arretierbar sind
und dass die Beschickungsvorrichtung zumindest eine Teigbeschickungsvorrichtung (5) zum Beschicken der unteren und oberen Backformen in aufgeklappter Stellung und zumindest eine Füllmassebeschickungsvorrichtung zum Auftragen der Füllmasse auf die mit Teig beschickte Lage der unteren und/oder oberen Backform aufweist.

15. Backvorrichtung nach einem der Ansprüche 1 bis 14, **dadurch gekennzeichnet, dass** die Backzangenachsen (25) quer zur Förderrichtung des Endlosförderers, bevorzugt in einem Winkel von 90° dazu angeordnet sind.

16. Backvorrichtung nach einem der Ansprüche 1 bis 15, **dadurch gekennzeichnet, dass** zum Auf- und Zuklappen der Backzangen (2) für jede Backzange (2) eine Klappvorrichtung (33) vorgesehen ist, wobei die Klappvorrichtungen (33) entsprechend der jeweiligen Stellung entlang des Endlosförderers (1) gesteuert werden, sodass die Backzangen (2) in Geschlossenstellung oder Offenstellung bewegt werden und dass die Klappvorrichtungen zum Öffnen und Schließen der Backzangen (2) insbesondere vor der Produktentnahmestation und vor dem Eintritt in den Backraum angeordnet sind.

17. Backvorrichtung nach einem der Ansprüche 1 bis 16, **dadurch gekennzeichnet, dass** die Backzangen (2) auf dem Endlosförderer (1) hintereinander angeordnet in Förderrichtung (26) von der Beschickungs- und Entnahmestation (4) in den Backraum (3) und nach Passieren der Umlenkrolle (10) wieder zurück zur Beschickungs- und Entnahmestation bewegt werden,
und dass die Backzangen (2) durch die zweite Umlenkrolle (9) wieder in den oberen Abschnitt des Endlosförderers gebracht werden, wobei die jeweilige Backzange (2) im unteren Abschnitt des Endlosförderers (1) wieder aus dem Backraum (3) austritt und nach Passieren der Umlenkrolle (9) geöffnet wird, um die Produkte entnehmen zu können.

18. Backvorrichtung nach einem der Ansprüche 1 bis 17, **dadurch gekennzeichnet, dass** Backzangenwägen (17) vorgesehen sind, die zu beiden Seiten Laufräder (18) aufweisen, mit denen sie auf Laufschienen (19) des Backofens laufen.

## Claims

1. A baking device for producing baked products, in particular for producing filled baked products, wherein the baking device having baking tongs (2), which can be swung open and closed and can be moved from a loading device (5) through the baking chamber (3) of the baking oven and to a product removal device (7) on an endless conveyor (1), which circulates in the longitudinal direction of the baking oven and is moved continuously, wherein the baking tongs (2) having a lower baking mould (24) and an upper baking mould (23), which can each be moved about a baking tongs axis (25) between an open position and a closed position, wherein the baking tongs (2) being connected to the endless conveyor (1) via detachable mechanical connections,
**characterised in that**
the baking device has a baking tongs removal station at least at one point of the endless conveyor (1), at which removal station the baking tongs (2) can be removed and can be put on,
and that the pick-up and re-delivery of the baking tongs (2) takes place on the continuously moving endless conveyor (1).

2. The baking device according to Claim 1,
**characterised in that**
the detachable mechanical connection is formed by a locking device and that the locking devices and the movements thereof are controlled by a control bar (21).

3. The baking device according to Claim 1 or 2,
**characterised in that**
the baking tongs (2) can be closed or are closed by the locking devices and that the baking tongs (2) can be connected or are connected fixedly to the endless conveyor (1) by the locking devices.

4. The baking device according to any one of Claims 1 to 3,
**characterised in that**
locking levers (20) are provided, which are controlled by the control bar (21) and that the locking levers (20) each have a control wheel (22) at the ends facing the control bar (21).

5. The baking device according to any one of Claims 1 to 4,
**characterised in that**
the baking tongs (2) are fastened or can be fastened to chain links (27) of the endless conveyor (1).

6. The baking device according to any one of Claims 1 to 5,
**characterised in that**
the baking tongs (2) are seated on the dual-sided chain links (27) of the endless conveyor (1) and are secured on the latter in the closed position by locking levers (20).

7. The baking device according to any one of Claims 1 to 6,
**characterised in that**
the baking tong (2) are released by opening the locking lever (20).

8. The baking device according to any one of Claims 1 to 7,
**characterised in that**
the baking tong (2) comprises retaining pins (43) and that the locking lever (20) holds the baking tong (2) if necessary firmly closed and also firmly connected to the chain link (27) of the endless conveyor (1) with its locking fork (35) by means of the retaining pins (43).

9. The baking device according to any one of Claims 1 to 8,
**characterised in that**
a baking tongs removal station, which contains the baking tongs pick-up device (11) and the baking tongs delivery device (12), is provided at the rear end on the baking chamber side, at a return pulley (10).

10. The baking device according to any one of Claims 1 to 9,
**characterised in that**
the baking tongs pick-up device (11) comprises a gripper bar (36), on which gripper fingers (37) that can be moved, lowered and raised are provided, so that a baking tong (2) can be lifted from the endless conveyor (1) and conveyed out of the baking chamber (3) and transferred to a transporting device (38) for subsequent processing.

11. The baking device according to any one of Claims 1 to 10,
**characterised in that**
on the gripper bar (36) gripper fingers (37) are provided, which can be moved, lowered and raised, and can be lowered in order to engage in the baking tong (2) to be changed and in order to lift the baking tong (2) from the endless conveyor (1), convey it out of the baking chamber (3) and transfer it to a transporting device (38) for subsequent processing.

12. The baking device according to any one of Claims 1 to 11,
**characterised in that**
the baking tongs delivery device (12) comprises a delivery conveyor, by means of which a new baking tong (2) is moved preferably to the lower section of the endless conveyor (1) and that where necessary the moved baking tong is connected to the endless conveyor by means of the locking device.

13. The baking device according to any one of Claims 1 to 12,
**characterised in that**
the supplied baking tongs (2) are pre-heated or will be pre-heated before transfer, so that a constant baking temperature is ensured, or that a delivered baking tong (2) is pre-heated in a heating apparatus so that the temperature is kept constant for receiving new baking dough.

14. The baking device for producing filled baked products according to any one of Claims 1 to 13,
**characterised in that**
the baking tongs (2) have a lower baking mould (24) and an upper baking mould (23), which can each be moved about a baking tongs axis (25) between an open position, which is opened 180°, and a closed position and can each be locked in the closed position, and that the loading device has at least one dough-loading device (5) for loading the lower and upper baking moulds in the swung-open position and at least one filling-loading device for applying the filling to the layer of the lower and/or upper baking mould that is loaded with dough.

15. The baking device according to any one of Claims 1 to 14,
**characterised in that**
the baking tongs axes (25) are arranged transversely to the conveying direction of the endless conveyor, preferably at an angle of 90° thereto.

16. The baking device according to any one of Claims 1 to 15,
**characterised in that**
a folding device (33) is provided for each pair of baking tongs (2) in order to swing the baking tongs (2) open and closed, wherein the folding devices (33) are controlled in accordance with the respective position along the endless conveyor (1) so that the baking tongs (2) are moved into the closed position or open position, and that the folding devices for opening and closing the baking tongs (2) are arranged in particular before the product removal station and before the entrance into the baking chamber.

17. The baking device according to any one of Claims 1 to 16,
**characterised in that**
the baking tongs (2) are moved on the endless conveyor (1), arranged one behind the other, in the conveying direction (26) from the loading and removal station (4) into the baking chamber (3) and, after passing the return pulley (10), back to the loading and removal station,
and that the baking tongs (2) are brought back into the upper section of the endless conveyor by the second return pulley (9), wherein each baking tong (2) exits the baking chamber (3) in the lower section of the endless conveyor (1) and is opened after passing the return pulley (9) to allow the products to be removed.

18. The baking device according to any one of Claims 1 to 17,
**characterised in that**
baking tongs trolleys (17) are provided, which have wheels (18) on both sides, with which said trolleys run on guide rails (19) of the baking oven.

## Revendications

1. Dispositif de cuisson pour la fabrication de produits de boulangerie, en particulier pour la fabrication de produits de boulangerie fourrés, dans lequel le dispositif de cuisson présente des pinces de cuisson (2) susceptibles d'être ouvertes et fermées, lesquelles peuvent être déplacées à travers l'espace de cuisson (3) du four à partir d'un dispositif de chargement (5) et vers un dispositif de prélèvement de produits (7) sur un transporteur sans fin (1) circulant en continu dans le sens longitudinal du four, dans lequel les pinces de cuisson (2) présentent un moule de cuisson inférieur (24) et un moule de cuisson supérieur (23), lesquels peuvent être déplacés respectivement autour d'un axe de pince de cuisson (25), entre une position d'ouverture et position de fermeture fermée, dans lequel les pinces de cuisson (2) sont reliées au transporteur sans fin (1) par des liaisons mécaniques amovibles,
**caractérisé en ce que**
en au moins un point du transporteur sans fin (1), le dispositif de cuisson présente une station de retrait de pinces de cuisson, dans laquelle des pinces de cuisson (2) peuvent être retirées et remontées,
et **en ce que** le retrait et le rajout des pinces de cuisson (2) sont effectués sur le transporteur sans fin (1) déplacé en continu.

2. Dispositif de cuisson selon la revendication 1,
**caractérisé en ce que** la liaison mécanique amovible est formée par un moyen de blocage, et **en ce que** les moyens de blocage et leurs mouvements sont commandés par un rail de commande (21).

3. Dispositif de cuisson selon la revendication 1 ou 2,
**caractérisé en ce que** les pinces de cuisson (2) peuvent être fermées ou sont fermées par les moyens de blocage, et **en ce que** les pinces de cuisson (2) peuvent être reliées ou sont reliées fixement au transporteur sans fin (1) par les moyens de blocage.

4. Dispositif de cuisson selon l'une des revendications 1 à 3, **caractérisé en ce qu'**il est prévu des leviers de blocage (20) commandés par le rail de commande (21), et **en ce que** les leviers de blocage (20) présentent respectivement une roue de commande (22) aux extrémités tournées vers le rail de commande (21).

5. Dispositif de cuisson selon l'une des revendications 1 à 4, **caractérisé en ce que** les pinces de cuisson (2) sont fixées ou peuvent être fixées sur des maillons de chaîne (27) du transporteur sans fin (1).

6. Dispositif de cuisson selon l'une des revendications 1 à 5, **caractérisé en ce que** les pinces de cuisson (2) s'appuient sur les maillons de chaîne (27) situés des deux côtés du transporteur sans fin (1) et sont maintenues sur celui-ci en position fermée par des leviers de blocage (20).

7. Dispositif de cuisson selon l'une des revendications 1 à 6, **caractérisé en ce que** la libération de la pince de cuisson (2) est effectuée par l'ouverture du levier de blocage (20).

8. Dispositif de cuisson selon l'une des revendications 1 à 7, **caractérisé en ce que** la pince de cuisson (2) comporte des tiges de maintien (43), et **en ce que** le levier de blocage (20) maintient la pince de cuisson (2) bien fermée au-dessus des tiges de maintien (43), le cas échéant avec sa fourche de blocage (35), tout en la maintenant reliée fixement au maillon de chaîne (27) du transporteur sans fin (1).

9. Dispositif de cuisson selon l'une des revendications 1 à 8, **caractérisé en ce qu'**à l'extrémité arrière côté espace de cuisson, au niveau d'une poulie de renvoi (10), il est prévu une station de retrait de pinces de cuisson contenant le dispositif de retrait de pinces de cuisson (11) et le dispositif d'ajout de pinces de cuisson (12).

10. Dispositif de cuisson selon l'une des revendications 1 à 9, **caractérisé en ce que** le dispositif de retrait de pinces de cuisson (11) comporte une poutre de préhension (36), sur laquelle sont prévus des doigts de préhension (37) déplaçables et aptes à être abaissés ou relevés, de sorte qu'une pince de cuisson (2) peut être retirée par le transporteur sans fin (1) et sortie de l'espace de cuisson (3), puis remise à un dispositif de transport (38) pour un traitement ultérieur.

11. Dispositif de cuisson selon l'une des revendications 1 à 10, **caractérisé en ce que** sur la poutre de préhension (36), il est prévu des doigts de préhension (37) déplaçables et aptes à être abaissés ou relevés, lesquels peuvent être abaissés pour s'insérer dans la pince de cuisson (2) à remplacer et pour retirer la pince de cuisson (2) du transporteur sans fin (1), la sortir de l'espace de cuisson (3) et la remettre à un dispositif de transport (38) pour un traitement ultérieur.

12. Dispositif de cuisson selon l'une des revendications 1 à 11, **caractérisé en ce que** le dispositif d'ajout de pinces de cuisson (12) comporte un transporteur de mise à disposition, permettant de rapprocher une nouvelle pince de cuisson (2) de préférence au niveau de la partie inférieure du transporteur sans fin (1), et **en ce que** le cas échéant, la pince de cuisson rapprochée est reliée au transporteur sans fin par le moyen de blocage.

13. Dispositif de cuisson selon l'une des revendications 1 à 12, **caractérisé en ce que** les nouvelles pinces de cuisson (2) rapprochées sont préchauffées avant la remise, de manière à garantir une température de cuisson constante, ou **en ce qu'**une pince de cuisson (2) rapprochée est préchauffée dans un dispositif de chauffage afin de maintenir une température constante lors de la réception d'une nouvelle pâte de boulangerie.

14. Dispositif de cuisson pour la fabrication de produits de boulangerie fourrés selon l'une des revendications 1 à 13, **caractérisé en ce que** les pinces de cuisson (2) présentent un moule de cuisson inférieur (24) et un moule de cuisson supérieur (23), lesquels peuvent être déplacés respectivement autour d'un axe de pince de cuisson (25), entre une position d'ouverture ouverte à 180° et une position de fermeture fermée, et bloqués en position fermée,
et **en ce que** le dispositif de chargement présente au moins un dispositif de chargement de pâte (5) pour le chargement des moules de cuisson inférieur et supérieur en position ouverte, et au moins un dispositif de chargement de fourrage pour l'application du fourrage sur la couche chargée de pâte du moule de cuisson inférieur et/ou supérieur.

15. Dispositif de cuisson selon l'une des revendications 1 à 14, **caractérisé en ce que** les axes de pince de cuisson (25) s'étendent perpendiculairement à la direction de transport du transporteur sans fin, de préférence selon un angle de 90° par rapport à celui-ci.

16. Dispositif de cuisson selon l'une des revendications 1 à 15, **caractérisé en ce que** pour l'ouverture et la fermeture des pinces de cuisson (2), il est prévu un dispositif de rabattement (33) pour chaque pince de cuisson (2), les dispositifs de rabattement (33) étant commandés en fonction de la position respective le long du transporteur sans fin (1), de sorte que les pinces de cuisson (2) sont déplacées en position fermée ou en position ouverte, et **en ce que** les dispositifs de rabattement pour l'ouverture et la fermeture des pinces de cuisson (2) sont en particulier agencés en amont de la station de prélèvement de produits et en amont de l'entrée dans l'espace de cuisson.

17. Dispositif de cuisson selon l'une des revendications 1 à 16, **caractérisé en ce que** les pinces de cuisson (2) sont agencées les unes à la suite des autres sur le transporteur sans fin (1) et déplacées dans la direction de transport (26) à partir de la station de chargement et de prélèvement (4) vers l'espace de cuisson (3) puis renvoyées vers la station de chargement et de prélèvement après leur passage par la poulie de renvoi (10),
et **en ce que** les pinces de cuisson (2) sont ramenées par la deuxième poulie de renvoi (9) vers la partie supérieure du transporteur sans fin, la pince de cuisson (2) respective dans la partie inférieure du transporteur sans fin (1) ressortant de l'espace de cuisson (3) et étant ouverte après son passage par la poulie de renvoi (9), afin de pouvoir prélever les produits.

18. Dispositif de cuisson selon l'une des revendications 1 à 17, **caractérisé en ce qu'**il est prévu des chariots de pinces de cuisson (17) présentant des roues (18) des deux côtés, avec lesquelles ils sont déplacés sur des rails (19) du four.
